# EUROPEAN PATENT SPECIFICATION

(11) **EP 0 911 684 B1**
(45) Date of publication and mention of the grant of the patent: **04.07.2001**
(21) Application number: 98120567.7
(22) Date of filing: 16.11.1993
(51) Int. Cl.: G03B 17/04, G03D 15/04, G03B 19/00

(54) **Method and apparatus for removing outer case**
Verfahren und Vorrichtung zum Entfernen einer äusseren Hülle
Procédé et appareil pour éliminer une couverture extérieure

(30) Priority: 16.11.1992 JP 30566792
(43) Date of publication of application: 28.04.1999
(62) Divisional of application: 93118513.6
(73) Proprietor: FUJI PHOTO FILM CO., LTD., Kanagawa-ken (JP)
(72) Inventor: Suehara, Kazuyoshi, Minami-Ashigara-shi, Kanagawa (JP); Wada, Toshiharu, Minami-Ashigara-shi, Kanagawa (JP)
(74) Representative: Grünecker, Kinkeldey, Stockmair & Schwanhäusser Anwaltssozietät

(56) References cited:
- EP-A2- 0 105 508
- DE-A1- 3 833 924
- US-A- 4 442 744
- US-A- 4 571 919
- US-A- 4 720 011
- US-A- 4 801 957
- US-A- 4 884 087
- US-A- 5 015 089

## Description

The present invention relates to a method and apparatus for removing an outer case. More particularly, the present invention relates to an automatically removing method conveniently capable of removing from a body of a lens-fitted photo film unit a packaging formed around the body.

Lens-fitted photo film units (hereinafter referred to simply as film units) are now on the market, e.g. under the trade name "Fujicolor Quick Snap" (manufactured by Fuji Photo Film Co., Ltd.). Such known photo film units are a single-use camera preloaded with photographic filmstrip (hereinafter referred to as film), as is disclosed in U.S.P. 4,884,087 and 4,972,649. The photo film unit is handled with such convenience that, like a simple photo film cassette, it can be deposited to a photofinishing agent in its entirety.

A body of the photo film unit includes a main assembly and a rear lid, between which unexposed photo film extends from a photo film supply chamber to a cassette containing chamber horizontally. After effecting each exposure, one who uses the photo film unit winds the photo film frame by frame back into a cassette. When photography with the photo film is completed, the photo film is entirely wound up into the cassette. The photo film unit has an outer case or cardboard packaging, which packages the body of the photo film unit, is adapted to protection of the body and appearance as merchandise, and is provided with external printing for decoration and indication of information.

Public concern is now shown on recycling parts of the photo film units, in view of economical use of limited resources and protection of global environment against destruction caused by successive disposal of industrial wastes. The photofinishing agent having received the photo film unit in its entirety, a photo laboratory is supplied with a number of photo film units, opens a bottom door of each body, unloads photo film, and treats the photo film for development and printing. A manufacturer of the photo film units collectively withdraws them as emptied, separates the cardboard packaging from each body, and disassembles it for the purpose of reuse. The peeled packaging is then brought into treatment for regeneration of cardboard to be used again with the photo film units.

There are known automatic apparatuses for providing the body with packaging. It is, however, nearly impossible to construct an apparatus for removing the cardboard packaging from the body safely without scratching the body. The packaging is manually removed from the body due to practical difficulties in automation. Continuous manual removal of packagings in a large scale is performed by hard movement of operators' fingers, and tires out the operators excessively. So slow a treatment is inconsistent to efficiency in recycling, no matter how speedily other relevant recycling processes may be performed.

US 4 571 919 A, corresponding to EP 0 105 508 A, discloses an apparatus according to the preamble of claim 8 and a method for removing a body (a photographic disc film) from a packaging (cartridge shell). However, there is a need to further improve and to facilitate the removing process.

In view of the foregoing problems, the object of the present invention is to provide an outer case removing method and apparatus conveniently and efficiently capable of removing a body of a unit from a packaging of said unit.

This object is solved by the method of claim 1 and the apparatus of claim 8.

The covering portion is attached to the packaging with adhesive agent reactivated by heat, and upstream from the separator means, the covering portion of the unit while conveyed is heated to melt the adhesive agent.

It is easy to construct an apparatus for removing the cardboard packaging from the body safely without scratching the body. No operation is required for removing a packaging from the body. Automated removal of packagings in a large scale is all consistent to high efficiency in recycling, and compatible to other speedy relevant recycling processes.

The above object and advantages of the present invention will become more apparent from the following detailed description when read in connection with the accompanying drawings, in which:
Fig. 1 is a perspective illustrating a lens-fitted photo film unit to be treated in the present invention;
Fig. 2 is a perspective illustrating the photo film unit of Fig. 1 with a rear coverage open;
Fig. 3 is an explanatory view in perspective illustrating a separating step in removing operation;
Fig. 4 is an explanatory view in elevation illustrating a pressing step in the removing operation;
Fig. 5 is a horizontal section illustrating a state when a blade tip is started to advance through a packaging illustrated in Fig. 2;
Fig. 6 is a perspective illustrating a state subsequent to that of Fig. 5;
Fig. 7 is a perspective illustrating another photo film unit with a rear coverage open;
Fig. 8 is a horizontal section illustrating a state when a blade tip is started to advance through a packaging illustrated in Fig. 7;
Fig. 9 is a perspective illustrating a state subsequent to that of Fig. 8; and
Fig. 10 is an explanatory view in perspective illustrating a removing apparatus and method according to the invention; and
Fig. 11 is a perspective as viewed from the front illustrating a heater illustrated in Fig. 10.

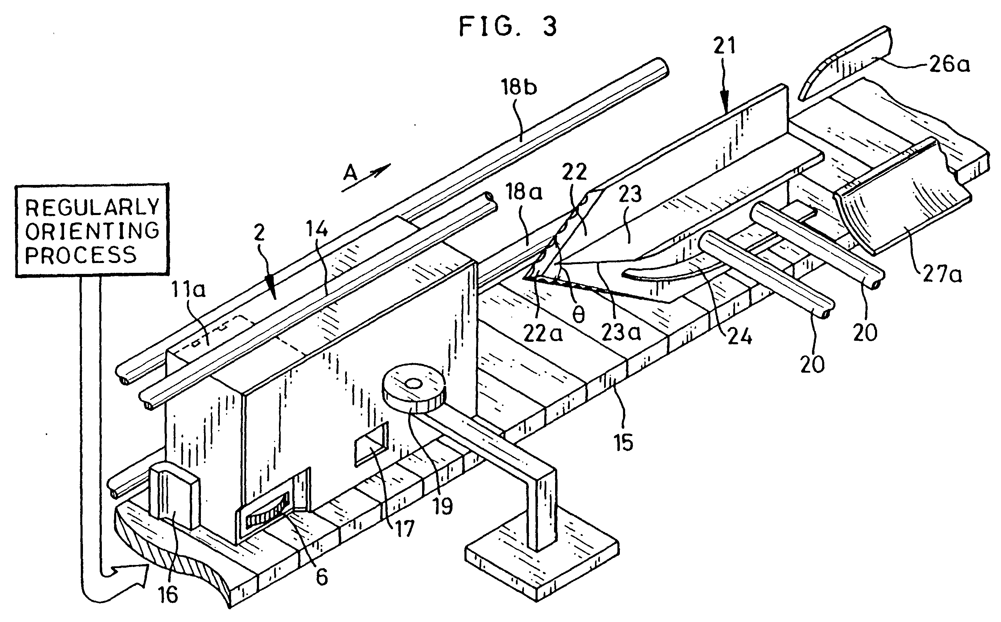

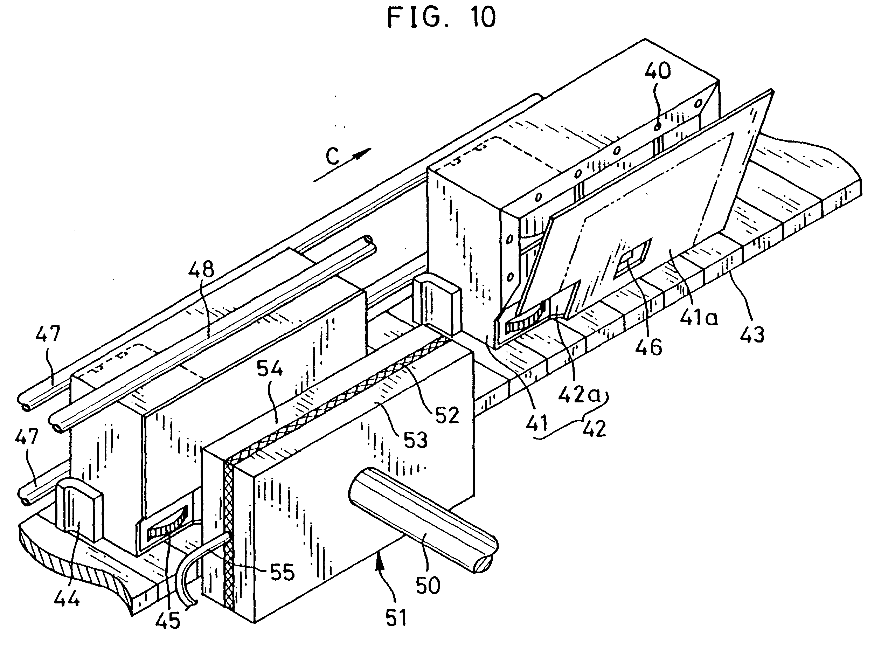

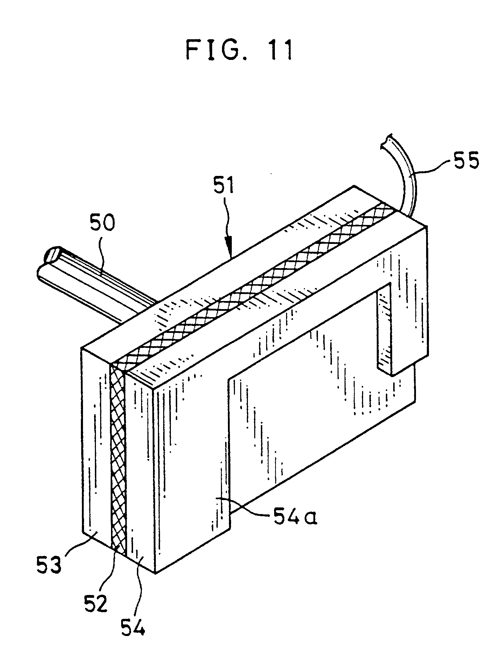

Figures 3-6, 8, 9 and the associated description disclose embodiments of the invention claimed in the parent application 93 118 513.6. Some features (e.g. separator jig 21, pressing pin 29) are suitable for use with embodiments of the present invention as described in conjunction with figures 10, 11.

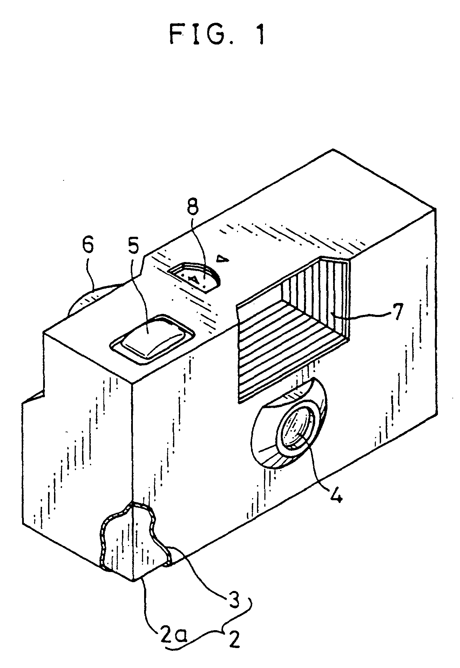

In Fig. 1 illustrating a lens-fitted photo film unit 2, a body 2a is formed from plastics, and generally packaged in an outer case or cardboard packaging 3. The packaging 3 is adapted to preservation and neat appearance of the photo film unit 2, and provided with printing of information and decoration. For photography, the packaging 3 has openings or holes for causing to appear a taking lens 4, a shutter button 5, a photo film winding wheel 6, a viewfinder window 7 and a frame number indicator window 8 for information of the number of remaining imaging frames.

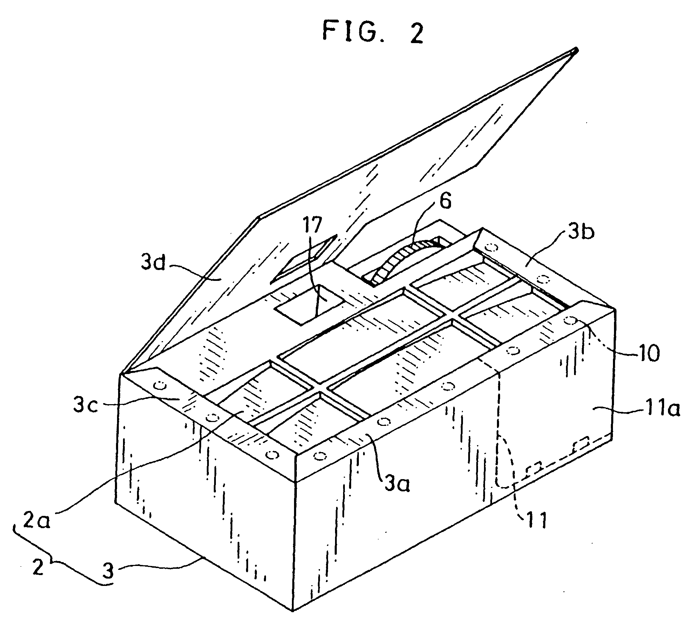

As illustrated in Fig. 2, the packaging 3 has a form of a wrapping-round type, and includes flaps 3a to 3c and a rear coverage 3d. Hot-melt adhesive agent 10 is placed on the flaps 3a to 3c, which are welded to the rear coverage 3d by heating the adhesive agent 10. The bottom of the packaging 3 covering the bottom of the body 2a is provided with a train of perforations 11, along which the packaging 3 is torn in order to take a photo film cassette (not shown) out of the body 2a.

Fig. 3 illustrates a process of cutting the packaging 3 of the photo film unit 2 in a outer case removing apparatus.

The photo film unit 2 is conveyed on a conveyor belt 15 while in contact with a stop ridge 16 formed on the belt 15. The photo film unit 2 is positioned on the belt 15 in an orientation of standing upside down and with the rear faced to the right as viewed along the conveyance of the belt 15. In other words, both the photo film winding wheel 6 and an eyepiece 17 of the viewfinder window 7 of the photo film unit 2, during conveyance, are located closely above the belt 15 and faced to the right. The photo film unit 2 on the belt 15 is clamped between a regulating roller 19 and regulating rails 18a and 18b, and prevented from being shaken by the belt 15 while vibrating in course of conveyance. The photo film unit 2 is also in contact with a support rail 14, which prevents the photo film unit 2 from shaking vertically.

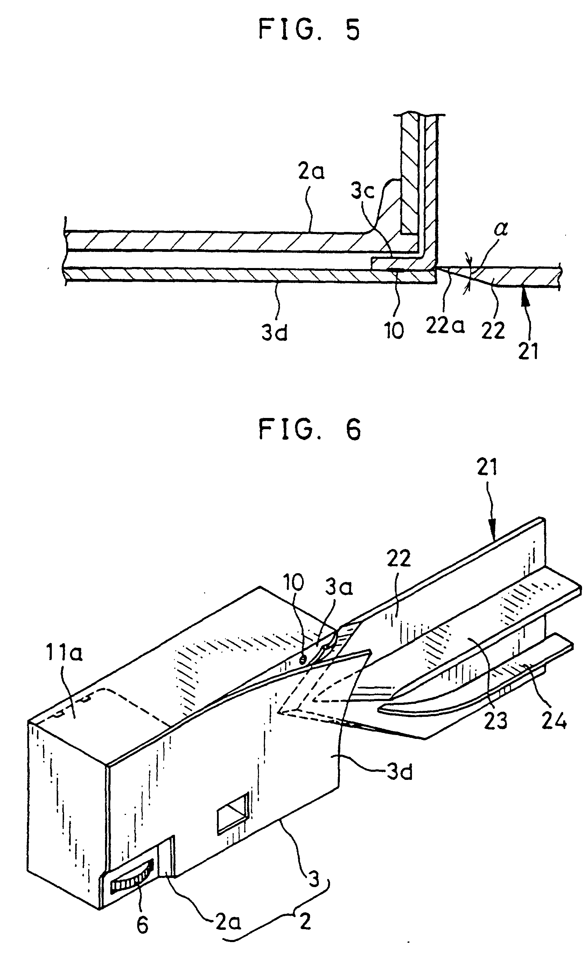

There is disposed a separator jig 21 in a position determined in the path of conveyance on the belt 15. The separator jig 21 is supported by arms 20, and is constituted of a main blade 22, a side blade 23 disposed on the main blade 22, and a guiding plate 24 under the side blade 23 for bending out the rear coverage 3d when cut and uncovered. Guiding rails 26a and 26b are disposed past the main blade 22 and located so closely to the main blade 22 as to constitute continued paths of separated portions of the packaging 3. The separator jig 21 can be constructed in modification in determining sizes, thicknesses, shapes and blade angles of the main blade 22 and the side blade 23, and a shape and position of the guiding plate 24, and an overall disposition correlated to the photo film unit 2. Such specified construction of the separator jig 21 depends on the shape and structure of the photo film unit 2 and the intensity in welding of the adhesive agent 10 on the rear coverage 3d. An angle θ of tapering a tip 22a of the main blade 22 as illustrated in Fig. 3 is from 60 to 150 degrees. An angle α of tapering a front edge of the main blade 22, as measured in Fig. 5, is from 20 to 50 degrees. Note that the side blade 23 according to this embodiment has a sharply tapered edge 23a, but alternatively may be a side plate which has generally the same shape and lacks any tapered edge.

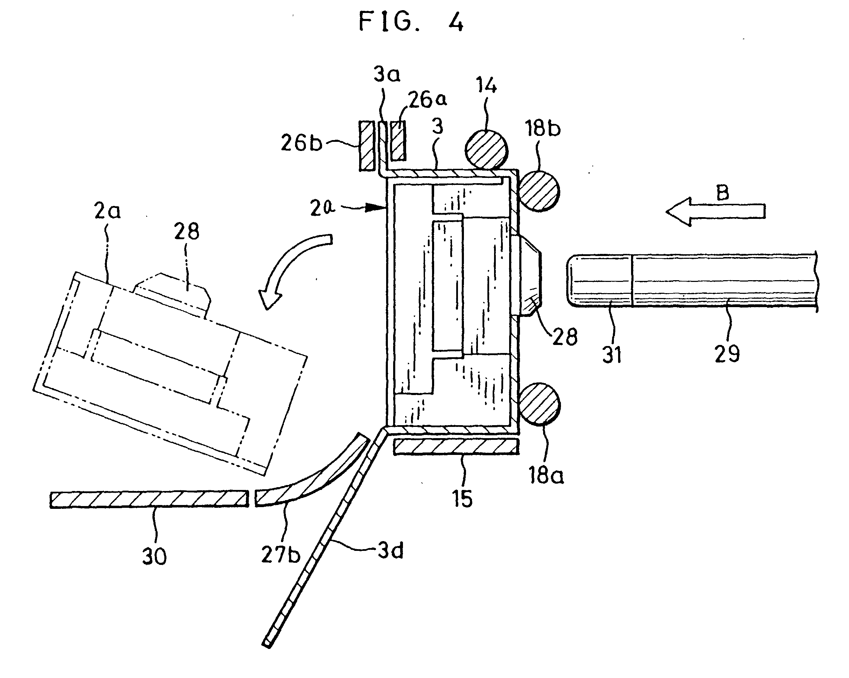

Fig. 4 illustrates a step in which the photo film unit 2 is divided into the body 2a and the packaging 3. The upward-located bottom flap 3a of the packaging 3 is bent out upward by an upper bender rail 26a. The rear coverage 3d of the packaging 3 is bent out downward by a lower bender rail 27b. Between the regulating rails 18a and 18b, a lens holder 28 of the body 2a for supporting the taking lens 4 is projected outside the packaging 3. To press the lens holder 28, a pressing pin 29 is disposed. When the pin 29 presses the lens holder 28, the pin 29 causes the body 2a to exit from the packaging 3. A base of the pressing pin 29 is linked and synchronized with the movement of the belt 15, because there is disposed a linking drive mechanism inclusive of chains and cams.

The body 2a, having been pressed out of the packaging 3, falls on to a flat conveyer belt 30 disposed alongside the lower bender rail 27b, and lies thereon. A tip of the pressing pin 29 is covered in a resinous cap 31 for the purpose of protect the body 2a from scratches. The body 2a, placed on the latter belt 30, is conveyed into the posterior disassembling process, in which the body 2a is disassembled into parts, as treatment desired for recycling lens-fitted photo film unit. The packaging 3 after removal is conveyed on the former belt 15 successively, and withdrawn as used cardboards for treatment in which the cardboards are regenerated. The belt 15 is continuously driven by a motor through all the above-described steps.

The operation of the outer case removing apparatus for the photo film unit 2 is now described. A user, having used the photo film unit 2, confirms that all his photography with the photo film unit 2 has been completed, and rotates the photo film winding wheel 6 in order to wind an exposed photo film into a cassette within the photo film unit 2, until the wheel 6 does not rotate further. Then the user brings his photo film unit 2 to a photofinishing agent, which collectively forwards such photo film units after photography to a photofinisher. The photofinisher in a photo laboratory tears the bottom of the packaging 3 along the perforation train 11, and takes out the photo film cassette with the exposed photo film.

The photo film cassettes as taken out of the photo film unit 2 is treated in development, printing and development of photographic paper, in a manner similar to photo film cassettes used in ordinary cameras. The photofinisher produces photographic prints, which are then forwarded to the user via the photofinishing agent. The photo film unit 2 after removal of the cassette is withdrawn by a manufacturer from photofinishers, and brought into the disassembling process performed in view of recycling of resources. Note that illustration of a tearable bottom portion 11a surrounded by the perforation train 11 is simplified in the drawings for convenience of understanding. A bottom door (not shown) covered by the tearable portion lla and disposed under the cassette is broken away, or otherwise closed again, so that there be a flat or flush bottom.

The photo film unit 2, as illustrated in Fig. 3, is oriented upside down, and is placed on the belt 15 with the front face on the regulating rails 18a and 18b, so as to direct the taking lens 4 to the left of the belt 15. The photo film unit 2 is positioned on the stop ridge 16 of the belt 15, and conveyed by the belt 15 in the direction A as shown. The roller 19 disposed slightly before the separator jig 21 regulates between it and the rails 18a and 18b an orientation of the photo film unit 2 to be separated by the separator jig 21.

In course of conveyance, the photo film unit 2 is pressed against the separator jig 21. The photo film unit 2 thus positioned on the belt 15 receives the blade tip 22a in a position between the rear coverage 3d and the lateral flap 3c, as illustrated in Fig. 5. The blade tip 22a is advanced through the joint with the adhesive agent on the rear coverage 3d as illustrated in Fig. 6, and forcibly separates the rear coverage 3d from the flap 3c and then the flap 3a. The flap 3a and the coverage 3d, while forcibly separated, are peeled away and started opening, by invalidating the welding of the adhesive agent 10. It follows that the rear of the packaging 3 begins being uncovered before the edge 23a of the side blade 23 starts cutting the rear coverage 3d. Although the photo film unit 2 receives impact from the main blade 22, the photo film unit 2 is vertically regulated by the support rail 14 and prevented from accidental movement. Smooth operation of the separator jig 21 for separation is never influenced by vibration.

The photo film unit 2 of which the rear is uncovered is brought by the belt 15 into the step of pressing the body 2a out of the packaging 3. The photo film unit 2 having come past the separator jig 21 is located at the guiding rails 26a and 27a. The flap 3a and the coverage 3d are respectively bent out by the guiding rails 26a and 27a, next conveyed up to the bender rails 26b and 27b, and then bent by the bender rails 26b and 27b to open fully. In course of the conveyance of the photo film unit 2, the lens holder 28 comes to the front of the pressing pin 29. The pin 29 is moved in linkage and synchronism with the movement of the belt 15 in parallel, because of the linking drive mechanism. The pressing pin 29 while moving is moved and projected in the direction B as shown, and presses the lens holder 28 as projected over the front of the packaging 3.

The rear of the packaging 3 is uncovered to open fully. The body 2a, while the lens holder 28 receives operation of the pin 29, is pressed out of the packaging 3. The cap 31 is so resinous that the lens holder 28 is prevented from being scratched. The latter belt 30 is disposed alongside and below the former belt 15, from which the body 2a is dropped while making half a revolution, to lie with the rear face on the latter belt 30.

The body 2a lying on the belt 30 is brought to the disassembling process as treatment for recycling the photo film units. The packaging 3 after removal is withdrawn as used cardboards for regenerating the cardboards.

Note that the photo film unit 2 is regularly oriented in an orienting process before it is placed on the conveyer belt 15 for the purpose of removal of the body 2a and the packaging 3. The regularly orienting process may be constituted of three steps: for orientation in the longitudinal direction, for orientation in the vertical direction, and for obverse/reverse orientation. Alternatively, the photo film unit 2 may be oriented by manual operation regularly one after another.

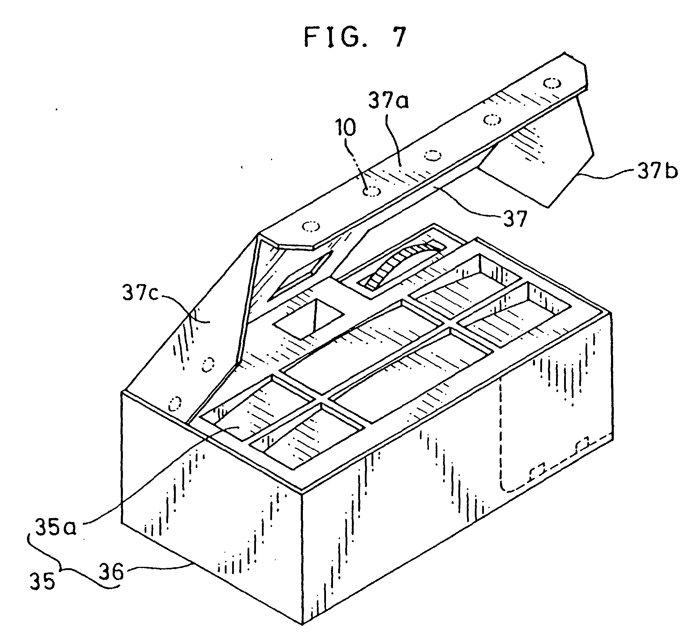

Fig. 7 illustrates another photo film unit 35 of which a body 35a is packaged in a cardboard packaging 36 having a form of a setup type. A rear coverage 37 is provided with flaps 37a to 37c, which are inserted between the body 35a and edge portions around a rear opening in the packaging 36. The flaps 37a to 37c are welded to the edge portions partly via hot-melt adhesive agent 10 and partly via water-soluble adhesive agent.

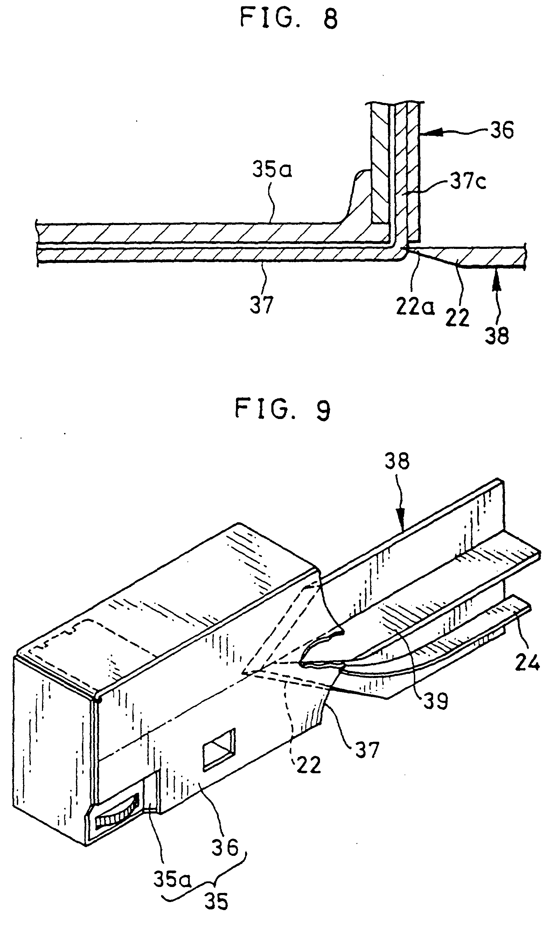

Removal of the packaging 36 from the body 35a is described now. The photo film unit 35 is placed on the belt 15 in the orientation the same as that in Fig. 3. The photo film unit 35 is conveyed by the belt 15 toward a separator jig 38. The lateral flap 37c is pierced by the blade tip 22a in a position near to and along a fold of the lateral flap 37c on the rear coverage 37, as illustrated in Fig. 8.

Further advancement of the photo film unit 35, as illustrated in Fig. 9, causes the main blade 22 to cut the flap 37c away from the rear coverage 37, and causes a side blade 39 at the same time to cut the rear coverage 37 horizontally along the phantom line as shown, to cut open the rear of the photo film unit 35. The guiding plate 24 of the separator jig 38 bends out the rear coverage 37 so as to uncover fully the rear of the photo film unit 35. Note that, should there be remaining portions on corners of the rear opening in the packaging 36, such portions would affect stability a subsequent operation of pressing the body 35a out of the packaging 36. The separator jig 38 can be constructed in modification in determining sizes, thicknesses, shapes, blade angles, and an overall disposition correlated to the photo film unit 35. The subsequent step follows, in all the same manner as that for the wrapping-round type above. Fig. 10 and 11 illustrate a removing apparatus and method according to the invention.

A photo film unit 42, to be treated by the outer case removing apparatus, has a body 42a and a cardboard packaging 41 of a wrapping-round type disposed thereabout and welded via adhesive agent 40 of a reactivating characteristic. The photo film unit 42 is placed on a conveyor belt 43 while in contact with a stop ridge 44 formed on the belt 43. The photo film unit 42 is oriented upside down on the belt 43, with a photo film winding wheel 45 and an eyepiece 46 both directed to the right of the belt 43. The photo film unit 42 on the belt 43 stands in contact with regulating rails 47, prevented from being shaken by the belt 43 while vibrating in course of conveyance, and is in contact with a support rail 48, which prevents the photo film unit 42 from shaking vertically.

A heater jig 51 is disposed on an upstream position along the belt 43, and is supported on an air cylinder arm 50. The heater jig 51 is constituted of a large-area heater 52 and two aluminum plates 53 and 54 sandwiching the heater 52, which is powered through a cable 55. The plate 54 is faced to the photo film unit 42, and has a contact surface 54a patterned and projected in correspondence with positions of the adhesive agent 40 on flaps of the packaging 41. The heater jig 51 can have an overall size as large as the largest possible photo film unit 42 of those varied in size, and can be adapted to all the varied photo film units.

The operation of the outer case removing apparatus is described now. The photo film unit 42 after removal of the cassette is withdrawn by a manufacturer from photofinishers, and brought into the disassembling process. The photo film unit 42 is conveyed in the direction C on the belt 43. The belt 43 is driven by a stepping motor, and caused to move the photo film unit 42 stepwise. When the photo film unit 42 is brought in front of the heater jig 51, the stepping motor is stopped to stop the belt 43.

In response to the stop of the belt 43, the air cylinder arm 50 is driven to move. The aluminum plate 54, while heated up to a predetermined temperature by the heater 52, comes in contact with a rear coverage 41a for a predetermined period and at a predetermined pressure. The adhesive agent 40 heated through the rear coverage 41a is reactivated and melted. Then the heater jig 51 is retracted. The bent portions of the packaging 41 at the flaps and the rear coverage have resilience of recovering a straight shape. This resilience helps leave the rear coverage 41a from the rear opening, and detach the rear coverage 41a at the adhesive agent as melted. The greater the resilience, the widely the rear coverage 41 opens.

The photo film unit 42, while conveyed, is then brought into a step of being treated by the separator jig 21. The rear coverage 41 thermally detached is mechanically opened. A disassembling step follows in a manner similar to the former.

According to the present embodiment of the invention, it is possible to position the separator jig 21 without somewhat high precision as compared with the former embodiment of the invention claimed in the parent application 93 118 513.6, because there takes place a somewhat space between the rear coverage 41a and the lateral flap by use of the heater jig 51 upstream from the separator jig 21. Note that, for raising the speed of the thermal treatment along the outer case removing line, it is preferable to set the heating temperature high, and set the contact time short. The heating temperature of 320 degrees Centigrade is preferable. Below 320 degrees is preferable in view of avoidance of influencing the packaging. The contact time of 0.5 second is preferable. Longer time than 0.5 second is allowable. Pressure to be applied to the photo film unit can be 0.1 kg/cm² or more, which makes little influences to the high treating speed. There might be an occasion where the outer case removing line is supplied not only with photo film units having the cardboard packaging but photo film units from which packagings have been already detached. To discriminate existence of a packaging, a sensor can be added to the line and disposed before the heater jig 51. If the sensor detects absence of a packaging on a body, the cylinder of the heater jig 51 can be stopped from being driven.

The heater jig 51 can have other general constructions instead of the large-area heater above: a heater plate may be provided with a stick-like heater inserted therein; a heater jig can generate high frequency for applying heat; light-spot heater can be used; otherwise hot air can be applied to the packaging. A train of heaters of a roller type may be also arranged, and are favorable in continuous conveyance on belt 43, because lack of interruption enlarges the treating speed.

Should the beginning station of the outer case removing line be provided additionally with unpackaged photo film units as housings without packaging, no problem arises in common to all the preferred embodiments above, because the unpackaged photo film unit passes by the station of the separator jig while pressed against the regulating rails 18a, 18b, 47 by the roller 19. Although the pressing pin 29 is used for pressing the body out of the packaging, another structure such as a rotary cam, air jet, and electromagnetic solenoid may be used alternatively. The present invention is applicable, not only to lens-fitted photo film units, but also to other articles in which a body is packaged in a packaging material.

The photo film units to be treated in the above embodiments is oriented commonly upside down on the belt 43 and with the coverage directed toward the side of the separating jig. However, it is possible for the novel construction of the present invention to treat photo film units without common arrangement of their tops and bottoms, but with the coverage directed toward the separating jig, and with the body longitudinally directed along the conveyance.

Although the present invention has been fully described by way of the preferred embodiments thereof with reference to the accompanying drawings, various changes and modifications will be apparent to those having skill in this field. Therefore, unless these changes and modifications depart from the scope of the present invention as defined by the claims, they should be construed as included therein.

## Claims

1. Method of removing a body (42a) of a unit (42) from a packaging (41) of said unit (42), said body (42a) having a first face, said packaging (41) including an opening and a covering portion (41a), attached to the rest of said packaging (41) with adhesive agent reactivatable by heat, for covering said first face, said opening and said covering portion (41 a) being adjacent to said first face in an initial state in which said body (42a) is packaged in said packaging (41), said method comprising steps of:
heating said covering portion (41a) of said unit (42) while said unit (42) is conveyed with the longitudinal direction of said first face oriented along the conveying direction (C), so as to melt said adhesive agent;
disposing stationary separator means (21) for separating said covering portion (41a) of said unit (42) from said first face;
pressing said unit (42) as heated on said separator means (21), said separator means (21) being inserted between said first face and said covering portion (41a) so as to open said covering portion (41a); and
pressing a second face of said body (42a) opposite to said first face of said body (42a) of said unit (42) when uncovered, so as to press said body (42a) out of said packaging (41) through said opening where said covering portion (41a) is opened.

2. Method as defined in claim 1, wherein said first face is substantially flat.

3. Method as defined in claim 1 or 2, wherein said first face of said body (42a) is faced in a predetermined direction while conveyed.

4. Method as defined in any of claims 1 or 3, wherein said unit (42) while conveyed is so regulated that said first face and said covering portion (41 a) are positioned for receiving said separator means (21).

5. Method as defined in any of claims 1 to 4, wherein said covering portion (41a), when opened, is bent back so as to open said opening fully.

6. Method as defined in any of claims 1 to 5, wherein said unit (42) is shaped as a tetragonal prism.

7. Method as defined in any of claims 1 to 6, wherein said packaging (41) has a second opening at said second face of said body (42a), and a pressing member is inserted into said second opening while said packaging (41) is immovably held, so as to press said body (42a) out.

8. Apparatus for removing a body (42a) of a unit (42) from a packaging (41) of said unit (42), said body (42a) having a first face, said packaging (41) including an opening and a covering portion (41a), attached to the rest of said packaging (41) with adhesive agent reactivatable by heat, for covering said first face, said opening and said covering portion (41a) being adjacent to said first face in an initial state in which said body (42a) is packaged in said packaging (41), said apparatus comprising:
conveyor means (43) for conveying said unit (42) with the longitudinal direction of said first face oriented along the conveying direction (C);
stationary separator means (21) for separating said covering portion (41a) of said unit (42) from said first face when said unit (42) is pressed on said separator means (21) while being conveyed by said conveyor means said separator means (21) being arranged to be inserted between said first face and said covering portion (41a) so as to open said covering portion (41a); and
pressing means (31) for pressing a second face of said body (42a) opposite to said first face of said body (42a) of said unit (42) when uncovered, so as to press said body (42a) out of said packaging (41) through said opening where said covering portion (41a) is opened; characterized by:
heater means (51) disposed upstream from said stationary separator means (21) for heating said covering portion (41a) of said unit (42) while conveyed by said conveyor means, to melt said adhesive agent.

9. Apparatus as defined in claim 8, wherein said first face is substantially flat.

10. Apparatus as defined in claim 8 or 9, wherein said first face of said body (42a) is faced in a predetermined direction while conveyed.

11. Apparatus as defined in any of claims 8 to 10, further comprising regulating means (47) for regulating said unit (42) while conveyed, so that said first face and said covering portion (41a) are positioned for receiving said separator means (21).

12. Apparatus as defined in any of the claims 8 to 11, including bender means (26b,27b) for bending said covering portion (41a), when opened, so as to open said opening fully.

13. Apparatus as defined in any of claims 8 to 12, wherein said packaging (41) has a second opening at said second face of said body (42a), and said pressing means (31) is arranged to be inserted into said second opening while said packaging (41) is immovably held, so as to press said body (42a) out.

## Patentansprüche

1. Verfahren zum Entfemen eines Körpers (42a) einer Einheit (42) von einer Verpackung (41) der Einheit (42), wobei der Körper (42a) eine erste Fläche hat, wobei die Verpackung (41) eine Öffnung und einen abdeckenden Bereich (41a) hat, der mit einem Klebemittel, das durch Wärme reaktiviert werden kann, an dem Rest der Verpackung (41) angebracht ist, um die erste Fläche abzudecken, wobei die Öffnung und der abdeckende Bereich (41a) angrenzend an die erste Fläche in einem ursprünglichen Zustand sind, in dem der Körper (42a) in der Verpackung (41) verpackt ist, wobei das Verfahren die folgenden Schritte umfasst:
Erwärmen des abdeckenden Bereiches (41a) der Einheit (42), während die Einheit (42) befördert wird, wobei die Längsrichtung der ersten Fläche in der Beförderungsrichtung (C) ausgerichtet ist, um das Klebemittel zum Schmelzen zu bringen;
Anbringen eines stationären Trennmittels (21), um den abdeckenden Bereich (41a) der Einheit (42) von der ersten Fläche zu entfemen;
Drücken der Einheit (42) in erwärmtem Zustand auf das Trennmittel (21), wobei das Trennmittel (21) zwischen die erste Fläche und den abdeckenden Bereich (41 a) eingefügt wird, um den abdeckenden Bereich (41a) zu öffnen; und
Drücken einer zweiten Fläche des Körpers (42a) gegenüberliegend zu der ersten Fläche des Körpers (42a) der Einheit (42), wenn dieser freigelegt ist, um den Körper (42a) aus der Verpackung (41) durch die Öffnung zu drücken, wenn der abdeckende Bereich (41) geöffnet ist.

2. Verfahren nach Anspruch 1, wobei die erste Fläche im Wesentlichen plan ist.

3. Verfahren gemäß der Definition in Anspruch 1 oder 2, wobei die erste Fläche des Körpers (42a) in eine vorgegebene Richtung während der Beförderung ausgerichtet ist.

4. Verfahren zum Entfernen nach der Definition in Anspruch 1 oder 3, wobei die Einheit (42) während der Beförderung so reguliert wird, dass die erste Fläche und der abdeckende Bereich (41a) positioniert werden, um das Trennmittel (21) aufzunehmen.

5. Verfahren zum Entfernen nach der Definition in Anspruch 1 bis 4, wobei der abdeckende Bereich (41a), wenn er geöffnet wird, nach hinten gebogen wird, um die Öffnung vollständig zu öffnen.

6. Verfahren zum Entfernen nach der Definition in einem der Ansprüche 1 bis 5, wobei die Einheit (42) wie ein tetragonales Prisma geformt ist.

7. Verfahren zum Entfernen nach der Definition in einem der Ansprüche 1 bis 6, wobei die Verpackung (41) eine zweite Öffnung an der zweiten Fläche des Körpers (42a) hat und ein Presselement in die zweite Öffnung eingeführt wird, währen die Verpackung (41) unbewegbar gehalten wird, um den Körper (42a) herauszupressen.

8. Vorrichtung zum Entfernen eines Körpers (42a) einer Einheit (42) von einer Verpackung (41) der Einheit (42), wobei der Körper (42a) eine erste Fläche hat, wobei die Verpackung (41) eine Öffnung und einen abdeckenden Bereich (41a) hat, der mit einem Klebemittel, das durch Wärme reaktiviert werden kann, an dem Rest der Verpackung (41) angebracht ist, um die erste Fläche abzudecken, wobei die Öffnung und der abdeckende Bereich (41a) angrenzend an die erste Fläche in einem ursprünglichen Zustand sind, in dem der Körper (42a) in der Verpackung (41) verpackt ist, wobei die Vorrichtung folgendes umfasst:
ein Beförderungsmittel (43) für das Befördern der Einheit (42) mit der longitudinalen Richtung der ersten Fläche entlang der Beförderungsrichtung (C) orientiert;
ein stationäres Trennmittel (21) für das Trennen des abdeckenden Bereichs (41a) der Einheit (42) von der ersten Fläche, wenn die Einheit (42) gegen das Trennmittel (21) gepresst wird, während sie durch das Beförderungsmittel (43) befördert wird, wobei das Trennmittel (21) so angeordnet ist, um zwischen der ersten Fläche und dem abdeckenden Bereich (41a) eingeführt zu werden, um den abdeckenden Bereich (41a) zu öffnen, und
ein Pressmittel (31) für das Pressen einer zweiten Fläche des Körpers (42a) gegenüberliegend zu der ersten Fläche des Körpers (42a) der Einheit (42), wenn dieser freigelegt ist, um den Körper (42a) aus der Verpackung (41) durch die Öffnung zu pressen, wenn der abdeckende Bereich (41a) geöffnet ist, **gekennzeichnet durch:**
eine Heizeinrichtung (51), die stromauf von dem stationären Trennmittel (21) angeordnet ist und den abdeckenden Bereich (41a) der Einheit (42) erhitzt, während sie durch das Beförderungsmittel befördert wird, um das Klebemittel zum Schmelzen zu bringen.

9. Vorrichtung nach der Definition in Anspruch 8, wobei die erste Fläche im Wesentlichen plan ist.

10. Vorrichtung nach der Definition in Anspruch 8 oder 9, wobei die erste Fläche des Körpers (42a) während der Beförderung in eine vorgegebene Richtung weist.

11. Vorrichtung nach der Definition in Anspruch 8 bis 10, die weiterhin ein Regulierungsmittel (47) umfasst, um die Einheit (42) während der Beförderung so zu regulieren, dass die erste Fläche und der abdeckende Bereich (41a) für das Aufnehmen des Trennmittels (21) positioniert werden.

12. Vorrichtung nach der Definition in einem der Ansprüche 8 bis 11, die ein Biegemittel (26b, 27b) umfasst, um den abdeckenden Bereich (41a) zu biegen, wenn er geöffnet wird, um die Öffnung vollständig zu öffnen.

13. Vorrichtung nach der Definition in einem der Ansprüche 8 bis 12, wobei die Verpackung (41) eine zweite Öffnung an der zweiten Fläche des Körpers (42a) hat und das Pressmittel (31) so angeordnet ist, um in die zweite Öffnung eingeführt zu werden, während die Verpackung (41) unbewegbar gehalten wird, um den Körper (42a) herauszupressen.

## Revendications

1. Procédé d'extraction d'un corps (42a) d'une unité (42) d'un conditionnement (41) de l'unité (42), le corps (42a) ayant une première face, le conditionnement (41) ayant une ouverture et une partie de couverture (41a) fixée au reste du conditionnement (41) par un agent adhésif qui peut être réactivé par la chaleur, et destiné à recouvrir la première face, l'ouverture et la partie de couverture (41a) étant adjacentes à la première face à un état initial dans lequel le corps (42a) est logé dans le conditionnement (41), le procédé comprenant les étapes suivantes :
le chauffage de la partie de couverture (41a) de l'unité (42) lorsque cette unité (42) est transportée avec la direction longitudinale de 1a première face orientée suivant la direction du transporteur (C) afin que l'agent adhésif fonde,
le montage d'un dispositif séparateur fixe (21) destiné à séparer la partie de couverture (41a) de l'unité (42) de la première face,
l'application d'une pression à l'unité (42) chauffée sur le dispositif séparateur (21), le dispositif séparateur (21) étant inséré entre la première face et la partie de couverture (41a) afin que la partie de couverture (41a) soit ouverte, et
l'application d'une pression à la seconde face du corps (42a) opposée à la première face du corps (42a) de l'unité (42) lorsqu'elle est découverte, afin que le corps (42a) soit soumis à une pression vers l'extérieur du conditionnement (41) par l'ouverture à l'endroit ou la partie de couverture (41a) est ouverte.

2. Procédé selon la revendication 1, dans lequel la première face est pratiquement plate.

3. Procédé selon la revendication 1 ou 2, dans lequel la première face du corps (42a) est tournée dans une direction prédéterminée pendant son transport.

4. Procédé selon la revendication 1 ou 3, dans lequel l'unité (42), pendant le transport, est réglée afin que la première face et la partie de couverture (41a) aient des positions permettant la réception du dispositif séparateur (21).

5. Procédé selon l'une quelconque des revendications 1 à 4, dans lequel la partie de couverture (41a), lorsqu'elle est ouverte, est pliée vers l'arrière afin qu'elle ouvre totalement l'ouverture.

6. Procédé selon l'une quelconque des revendications 1 à 5, dans lequel l'unité (42) a la forme d'un prisme tétragonal.

7. Procédé selon l'une quelconque des revendications 1 à 6, dans lequel le conditionnement (41) a une seconde ouverture au niveau de la seconde face du corps (42a), et un organe de pression est inséré dans la seconde ouverture lorsque le conditionnement (41) est maintenu sous forme immobile, afin que le corps (42a) soit chassé vers l'extérieur par une pression.

8. Appareil d'extraction d'un corps (42a) d'une unité (42) d'un conditionnement (41) de l'unité (42), le corps (42a) ayant une première face, le conditionnement (41) ayant une ouverture et une partie de couverture (41a), fixée au reste du conditionnement (41) par un agent adhésif qui peut être réactivé par la chaleur, afin que la première face soit couverte, l'ouverture et la partie de couverture (41a) étant adjacentes à la première face à un état initial dans lequel le corps (42a) est logé dans le conditionnement (41), l'appareil comprenant :
un dispositif transporteur (43) destiné à transporter l'unité (42) avec la direction longitudinale de la première face orientée dans la direction de transport (C),
un dispositif séparateur fixe (21) destiné à séparer la partie de couverture (41a) de l'unité (42) de la première face lorsque l'unité (42) est poussée par pression sur le dispositif séparateur (21) tout en étant transportée par le dispositif transporteur (43), le dispositif séparateur (21) étant destiné à être inséré entre la première face et la partie de couverture (41a) afin que la partie de couverture (41a) soit ouserte, et
un dispositif (31) d'application d'une pression à une seconde face du corps (42a) qui est opposée à la première face du corps (42a) de l'unité (42) lorsqu'elle est découverte, si bien que le corps (42a) peut être chassé à l'exterieur du conditionnement (41) par une pression, par l'intermédiaire de l'ouverture, lorsque la partie de couverture (41a) est ouverte, caractërisé par
un dispositif (51) à organe de chauffage placé en amont du dispositif séparateur stationnaire (21) et destiné à chauffer la partie de couverture (41a) de l'unité (42) lors de son transport par le dispositif transporteur afin que l'agent adhésif fonde.

9. Appareil selon la revendication 8, dans lequel la première face est pratiquement plate.

10. Appareil selon la revendication 8 ou 9, dans lequel la première face du corps (42a) est tournée en direction prédéterminee pendant le transport.

11. Appareil selon l'une quelconque des revendications 8 à 10, comprenant en outre un dispositif de régulation (47) destiné à régler l'unite (42) pendant son transport, si bien que la première face et la partie de couverture (41a) sont disposées afin qu'elles logent le dispositif séparateur (21).

12. Appareil selon l'une quelconque des revendications 8 à 11, comprenant un dispositif à organe de pliage (26b, 27b) destiné à plier la partie de couverture (41a) lorsqu'elle est ouverte afin que l'ouverture soit complëtement ouverte.

13. Appareil selon l'une quelconque des revendications 8 à 12, dans lequel le conditionnement (41) a une seconde ouserture placée à la seconde face du corps (42a), et le dispositif d'application de pression (31) est destiné à être inséré dans la seconde ouverture lorsque le conditionnement (41) est maintenu sous forme immobile, afin que le corps (42a) soit chassé vers l'extérieur par une pression.
